# EUROPÄISCHE PATENTANMELDUNG

(11) **EP 4 303 454 A1**
(43) Veröffentlichungstag der Anmeldung: **10.01.2024**
(21) Anmeldenummer: 22183337.9
(22) Anmeldetag: 06.07.2022
(51) Int. Cl.: F16B 25/00

(54) **SCHRAUBE MIT UNTERSCHIEDLICHEN GEWINDEPROFILWINKELN**

(71) Anmelder: SPAX International GmbH & Co. KG, 58256 Ennepetal (DE)
(72) Erfinder: LANGEWIESCHE, Frank, 45549 Sprockhövel (DE)
(74) Vertreter: Schneider, Sascha

(57) **Zusammenfassung**

Die Erfindung betrifft eine Schraube (1) aufweisend ein Gewinde (G), wobei das Gewinde Bereiche (A, B) mit unterschiedlichen Gewindeprofilwinkeln (a,b) aufweist.

## Beschreibung

Die Erfindung betrifft eine Schraube gemäß dem Patentanspruch 1.

Schrauben, insbesondere Holzschrauben beziehungsweise Spanplattenschrauben, werden heutzutage nicht mehr nur bei der Verarbeitung von Spanplatten zum Beispiel in der Möbelindustrie erfolgreich eingesetzt. Der Markt an solchen Schrauben ist in den letzten Jahren stark gewachsen, so dass auch die Einsatzgebiete zahlreicher geworden sind.

Dabei werden die unterschiedlichsten Hölzer verarbeitet. Je schwerer und härter das Holz ist, also je größer die Dichte, umso höher sind die Anforderungen an die Verbindungsmittel, insbesondere Schrauben. Schrauben für die holzverarbeitende Industrie müssen daher immer stabiler werden, da in härteren Hölzern die Einschraubmomente immer größer werden.

Oft muss deshalb das Holz vorgebohrt werden, um die Einschraubmomente klein zu halten. Dies gilt nicht nur bei der Verschraubung von nicht gehärteten Edelstahlschrauben, sondern auch bei gehärteten Schrauben.

Problematisch bei Schrauben im Stand der Technik ist, dass die Einschraubmomente sowohl bei vorgebohrten als auch bei nicht vorgebohrten Verschraubungen sehr hoch sind. Dadurch ist es erforderlich, dass die Schrauben hohe Querschnitte aufweisen und gehärtet sein müssen. Auch ist das Verhältnis des Bruchdrehmoments der Schraube zum maximalen Einschraubmoment im Stand der Technik sehr ungünstig, so dass es nachteilig für Zulassungen sein kann.

Es ist daher die Aufgabe der vorliegenden Erfindung, die Nachteile des Stands der Technik zu beseitigen.

Gelöst wird diese Aufgabe mit dem Gegenstand des unabhängigen Anspruchs. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Den angegebenen Wertebereichen sollen auch innerhalb der genannten Grenzen liegende Werte als Grenzwerte offenbart und in beliebiger Kombination beanspruchbar sein.

Erfindungsgemäß vorgesehen ist eine Schraube, insbesondere Holzschraube, aufweisend ein Gewinde, wobei das Gewinde Bereiche mit unterschiedlichen Gewindeprofilwinkeln aufweist.

Durch die unterschiedlichen Gewindeprofilwinkel ist es erfindungsgemäß vorteilhaft insbesondere möglich, die Einschraubmomente zu reduzieren, da die Reibung beim Einschrauben der Schraube in das Holz reduziert werden kann. Dieses gilt selbstverständlich auch, wenn das Holz bereits vorgebohrt ist.

Insbesondere ist es in einer vorteilhaften Ausführungsform vorgesehen, dass in einem ersten Bereich ein erster Gewindeprofilwinkel ausgebildet ist und in einem zweiten Bereich ein zweiter Gewindeprofilwinkel ausgebildet ist, wobei der erste Gewindeprofilwinkel größer ist als der zweite Gewindeprofilwinkel.

Besonders vorteilhaft ist es, wenn sich die Schraube von einem Kopf mit einem Kraftangriff zu einem vorderen Bereich, insbesondere einer Spitze, erstreckt, wobei der Gewindeprofilwinkel im vorderen Bereich größer ist als der Gewindeprofilwinkel in einem hinteren Bereich.

Optional kann es vorgesehen sein, dass in einem vorderen Bereich ein größerer Gewindeprofilwinkel ausgebildet ist als in einem darauffolgenden mittleren Bereich, wobei der Gewindeprofilwinkel in einem auf den mittleren Bereich folgenden hinteren Bereich größer ausgebildet ist als im mittleren Bereich.

In einer alternativen Ausführungsform ist es vorgesehen, dass der Gewindeprofilwinkel im vorderen Bereich kleiner ist als der Gewindeprofilwinkel in einem hinteren Bereich.

Optional kann es vorgesehen sein, dass in einem vorderen Bereich ein kleiner Gewindeprofilwinkel ausgebildet ist als in einem darauffolgenden mittleren Bereich, wobei der Gewindeprofilwinkel in einem auf den mittleren Bereich folgenden hinteren Bereich kleiner ausgebildet ist als im mittleren Bereich.

Insbesondere kann es in einer beispielhaften Ausführungsform weiterhin vorgesehen sein, dass auch der Gewindedurchmesser und/oder die Dachbreite der Flanke vergrößert werden. Die Gewindeflanken im vorderen Bereich haben dadurch ein größeres Volumen und verdrängen mehr Material, so dass sie das Gegengewinde im Holz größer auffurchen, so dass die folgenden Gewindegänge ohne oder mit weniger Reibung in das vorgefurchte Gegengewinde verschraubt werden können.

Herkömmliche Dachbreiten liegen bei 1 % bis 4 % vom Nenndurchmesser der Schraube. In einer bevorzugten Ausführungsform ist die Dachbreite größer ausgebildet, nämlich im Bereich von 130 % bis 200 % von herkömmlichen Dachbreiten.

Die erfindungsgemäße Schraube kann im vorderen Bereich mit einer Spitze ausgebildet sein. Alternativ kann die erfindungsgemäße Schraube derart ausgebildet sein, dass es keine Spitze gibt, sondern dass der vordere Bereich zylindrisch beziehungsweise nicht spitz ausgebildet ist.

Des Weiteren kann das Gewinde im ersten und/oder im zweiten Bereich symmetrisch ausgebildet sein. Alternativ kann das Gewinde im ersten Bereich und/oder im zweiten Bereich unsymmetrisch ausgebildet sein.

In einer weiteren bevorzugten beispielhaften Ausführungsform ist vorgesehen, dass mehrere Bereiche mit unterschiedlichen Gewindeprofilwinkeln abwechselnd hintereinander entlang der Schraubenlängsachse angeordnet sind.

Insbesondere kann es vorgesehen sein, dass nach einem Bereich mit einem kleineren Gewindeprofilwinkel in einem dahinterliegenden Bereich es wieder einen Bereich mit einem größeren Gewindeprofilwinkel gibt. Dadurch ist es vorteilhaft möglich, dass das Gegengewinde im Holz erneut aufgeweitet werden kann, wodurch die folgenden Gewindegänge wieder mit weniger Reibung in das vorgefurchte Gegengewinde gleiten können, wodurch die Reibung in Bezug auf das Holz wieder verringert werden kann.

In einer vorteilhaften beispielhaften Ausführungsform ist es vorgesehen, dass in einem vorderen Bereich ein Gewindeprofilwinkel von 50 bis 75 Grad, bevorzugt 55 bis 70 Grad, ausgebildet ist und in einem dahinterliegenden Bereich ein kleinerer Gewindeprofilwinkel von 30 bis 45 Grad, bevorzugt 32 bis 42 Grad, ausgebildet ist.

In einer anderen bevorzugten Ausführungsform ist im vorderen Bereich der Gewindeprofilwinkel 15 Prozent größer als der Gewindeprofilwinkel des dahinterliegenden Bereichs, bevorzugt mehr als 25 Prozent größer, weiter bevorzugt mehr als 35 Prozent größer, am bevorzugtesten mehr als 50 Prozent größer.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen jeweils in schematischer Ansicht:
Figur 1 zeigt schematisch eine erfindungsgemäße Schraube gemäß einer ersten Ausführungsform,
Figur 2 eine Schraube gemäß einer zweiten erfindungsgemäßen Ausführungsform,
Figur 3 eine Schraube gemäß einer dritten erfindungsgemäßen Ausführungsform und
Figur 4 eine Schraube gemäß einer vierten erfindungsgemäßen Ausführungsform.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleichwirkender Funktion mit identischen Bezugszeichen gekennzeichnet sind.

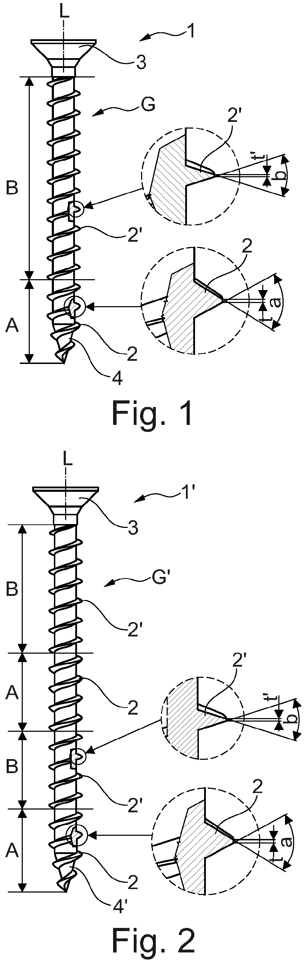

Figur 1 zeigt schematisch eine erfindungsgemäße Ausführungsform einer Schraube 1. Die Schraube 1 erstreckt sich entlang einer Längsachse L von einem Kopf 3 mit einem Kraftangriff bis hin zu einem vorderen Bereich 4. In dieser Ausführungsform ist der vordere Bereich mit einer Spitze ausgebildet; es kann sich alternativ auch um einen vorderen Bereich mit einer stumpfen Ausbildung anstelle von einer Spitze handeln.

Die Schraube 1 weist auf ein Gewinde G, welches sich vom Kopf 3 bis hin zum vorderen Bereich 4 beziehungsweise bis zur Spitze erstreckt.

Erfindungsgemäß weist das Gewinde G zwei Bereiche A, B auf, welche unterschiedliche Gewindeprofilwinkel a, b aufweisen.

Im Bereich A weist das Gewinde G ein Gewindeprofil 2 auf und im Bereich B ein Gewindeprofil 2'. Die beiden Profile sind in Detailansichten vergrößert dargestellt.

Das Gewindeprofil 2 weist den Gewindeprofilwinkel a auf, der in diesem beispielhaften Ausführungsbeispiel etwa 60 Grad beträgt. Weiterhin weist das Gewindeprofil 2 eine Dachbreite t auf.

Das Gewindeprofil 2' weist einen kleineren Gewindeprofilwinkel b auf, welcher ungefähr 35 Grad beträgt. Die Dachbreite des Gewindeprofils 2' beträgt t'.

In dieser Ausführungsform sind die Gewindeprofile symmetrisch ausgebildet. Der hintere Bereich B erstreckt sich bis hin zum Kopf 3.

Die Dachbreiten t, t' können identisch sein, die Dachbreite t kann aber auch größer sein als die Dachbreite t', oder die Dachbreite t kann kleiner sein als die Dachbreite t'.

In der Figur 2 ist eine zweite erfindungsgemäße Ausführungsform dargestellt. Im Wesentlichen ist diese zweite Ausführungsform ähnlich zu der Ausführungsform aus Figur 1.

In dieser Ausführungsform ist es allerdings so, dass der Bereich A und der Bereich B zweimal entlang der Schraube angeordnet sind. Das bedeutet, dass im vorderen Bereich das Gewindeprofil 2 ausgebildet ist und im dahinterliegenden Bereich B das Gewindeprofil 2' ausgebildet ist. Im Gegensatz zur Ausführungsform der Figur 1 ist es hier so, dass hinter dem Bereich B noch mal ein Bereich A mit dem Gewindeprofil 2 ausgebildet ist und hinter dem Bereich A nochmals ein Bereich B mit dem Gewindeprofil 2' ausgebildet ist.

Im Vergleich zur Ausführungsform der Figur 1 hat diese Ausführungsform den Vorteil, dass durch den erneuten Bereich A eine erneute Aufweitung des Gewindes im Holz erzeugt wird, wodurch die Reibung im dahinterliegenden Bereich B wiederum verringert werden kann.

Das Gewinde G' in dieser Ausführungsform der Schraube 1' weist also im vorderen Bereich 4' den Bereich A auf, dahinter folgt der Bereich B, dahinter folgt der Bereich A und dahinter erfolgt nochmals der Bereich B, der sich bis zum Kopf 3 erstreckt.

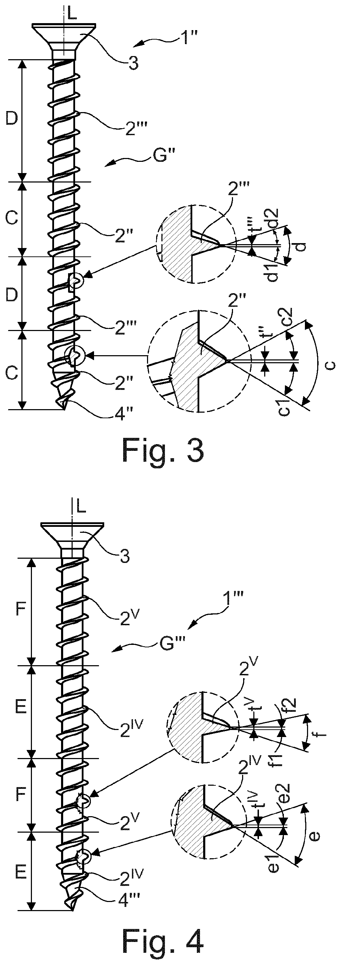

Figur 3 zeigt eine Schraube 1" gemäß einer dritten Ausführungsform der vorliegenden Erfindung. Auch hier weist die Schraube 1" erfindungsgemäß mehrere Bereiche C, D mit unterschiedlichen Gewindeprofilwinkeln c, d auf.

In einem vorderen Bereich 4", der als Spitze ausgebildet ist, weist das Gewinde G" in einem Bereich C ein Gewindeprofil 2" auf. In der Detailansicht ist erkennbar, dass das Gewindeprofil 2" einen Gewindeprofilwinkel c aufweist, welcher ungefähr 60 Grad groß ist. Im Gegensatz zu den Ausführungsformen aus den Figuren 1 und 2 ist jedoch das Gewindeprofil 2" unsymmetrisch ausgebildet. In dieser Ausführungsform ist der Gewindeprofilwinkel unterteilt in den Gewindeflankenwinkel c1 und c2. Die Gewindeflankenwinkel c1, c2 bilden somit in Summe den Gewindeprofilwinkel c, so wie gängige Spezifikationen es definieren, zum Beispiel DIN 2244.

In dieser beispielhaften Ausführungsform ist der Gewindeflankenwinkel c1 kleiner als der Gewindeflankenwinkel c2, z.B. cl=15° und c2=30°.

Das Gewindeprofil 2" weist eine Dachbreite t" auf.

In einem Bereich D, welcher hinter dem Bereich C im vorderen Bereich 4" angeordnet ist, weist das Gewinde G" ein Gewindeprofil 2‴ auf, welches ebenfalls in der Detailansicht dargestellt ist.

Das Gewindeprofil 2‴ weist einen Gewindeprofilwinkel d auf. Dieser Gewindeprofilwinkel d ist kleiner als der Gewindeprofilwinkel c des Bereichs C.

Wie auch das Gewindeprofil 2" ist das Gewindeprofil 2‴ unsymmetrisch ausgebildet. Der Gewindeprofilwinkel d weist einen Gewindeflankenwinkel d1 und d2 auf, wobei der Gewindeflankenwinkel d1 größer ist als der Gewindeflankenwinkel d2. Weiterhin weist das Gewindeprofil 2‴ eine Dachbreite t‴ auf.

Die Dachbreiten t, t" und t^{IV} können 1,3 - 2, mal so groß ausgebildet werden als die folgenden Dachbreiten t' , t‴ und t^{V}.

Zum Beispiel wenn t'=0,1mm ist kann t= 0,13 - 0,2 mm ausgebildet sein, oder wenn t'=0,4 mm ist kann t = 0,5 - 0,8 mm sein

In dieser beispielhaften dritten Ausführungsform folgt hinter dem Bereich D mit dem Gewindeprofil 2‴ wieder das Gewindeprofil 2" des Bereichs C. Hinter diesem Bereich C folgt wiederum das schmalere Gewindeprofil 2‴ im Bereich D, welcher sich bis zum Kopf 3 erstreckt.

Die vorliegende Ausführungsform weist somit hinter dem schmaleren Bereich D nochmals einen breiteren Gewindeprofilwinkel auf, der das Holz nochmals aufweitet, so dass im hinteren Bereich D die Reibung verringert werden kann.

Figur 4 zeigt eine Schraube 1‴ gemäß einer vierten Ausführungsform mit einem Gewinde G‴. In einem vorderen Bereich 4‴ weist die Schraube einen Bereich E mit einem Gewindeprofil 2^{IV} auf, welcher wiederum im Detail dargestellt ist.

In diesem Gewindeprofil 2^{IV} ist das Profil mit einem Gewindeprofilwinkel e ausgestattet, welcher sich aufteilt in einen Gewindeflankenwinkel e1 und e2.

Das Gewindeprofil 2^{IV} ist somit wie auch das Profil in der dritten Ausführungsform unsymmetrisch ausgebildet.

In dieser Ausführungsform ist der Gewindeflankenwinkel e1 ungefähr doppelt so groß wie der Gewindeflankenwinkel e2.

Das Gewindeprofil 2^{IV} weist weiterhin eine Dachbreite t^{IV} auf.

Im dahinterliegenden Bereich F weist das Gewinde G‴ ein Gewindeprofil 2^{V} auf, welches im Detail dargestellt ist.

Das Gewindeprofil 2^{V} weist einen Gewindeprofilwinkel f auf, wobei dieser Gewindeprofilwinkel f kleiner ist als der Gewindeprofilwinkel e im vorderen Bereich 4‴.

Erneut ist das Gewindeprofil 2^{V} unsymmetrisch ausgebildet. Der Gewindeprofilwinkel f weist einen Gewindeflankenwinkel f1 und einen Gewindeflankenwinkel f2 auf, wobei der Gewindeflankenwinkel f1 ungefähr doppelt so groß ist wie der Gewindeflankenwinkel f2. Der Gewindeprofilwinkel beträgt ungefähr 35 Grad ±10 Grad.

Die Dachbreite in diesem Gewindeprofil 2^{V} beträgt t^{V}.

In dieser vierten Ausführungsform befindet sich hinter dem Bereich F nochmals der Bereich E mit dem Gewindeprofil 2^{IV}. Dadurch wird beim Einschrauben in das Holz nochmals mit diesem aufgeweiteten Gewindeprofil eine Aufweitung des Innenprofils im Holz erreicht, so dass im weiteren Verlauf eine geringere Reibung erreicht werden kann.

Hinter diesem aufgeweiteten Bereich E erfolgt nochmals der Bereich F mit einem schmaleren Gewindeprofil 2^{V}, so dass in diesem Bereich die Reibung wieder verringert werden kann. Dieser hintere Bereich F erstreckt sich bis hin zum Kopf 3.

Die vorliegende Figurenbeschreibung dient lediglich der Illustration von Beispiel der Erfindung und grenzt den Schutzbereich der vorliegenden Erfindung nicht ein. Der Schutzbereich der vorliegenden Erfindung wird durch den Gegenstand der Patentansprüche definiert.

### Bezugszeichenliste

- 1,1',1",1‴: Schraube
- 2,2',2",2‴,2^{IV},2^{V}: Gewindeprofil
- 3: Kopf
- 4,4',4"4,‴: vorderer Bereich
- a,b,c,d,e,f: Gewindeprofilwinkel
- c1,c2,d1,d2,e1,e2,f1,f2: Gewindeflankenwinkel
- G,G',G",G: ‴ Gewinde
- L: Schraubenlängsachse
- t,t',t",t‴,t^{IV},t^{V}: Dachbreite

## Patentansprüche

1. Schraube (1,1',1",1‴), insbesondere Holzschraube, aufweisend ein Gewinde (G,G',G",G‴), **dadurch gekennzeichnet, dass** das Gewinde (G,G',G",G‴) Bereiche (A,B,C,D,E,F) mit unterschiedlichen Gewindeprofilwinkeln (a,b,c,d,e,f) aufweist.

2. Schraube (1,1',1",1‴) gemäß Anspruch 1, wobei in einem ersten Bereich (A,C,E) ein erster Gewindeprofilwinkel (a,c,e) ausgebildet ist und in einem zweiten Bereich (B,D,F) ein zweiter Gewindeprofilwinkel (b,d,f) ausgebildet ist, wobei der erste Gewindeprofilwinkel (a,c,e) größer ist als der zweite Gewindeprofilwinkel (b,d,f).

3. Schraube (1,1',1",1‴) gemäß mindestens einem der vorhergehenden Ansprüche, wobei das Gewinde (G,G') im ersten Bereich (A) und/oder im zweiten Bereich (B) symmetrisch ausgebildet ist.

4. Schraube (1,1',1",1‴) gemäß mindestens einem der vorhergehenden Ansprüche, wobei das Gewinde (G",G‴) im ersten Bereich (C,E) und/oder im zweiten Bereich (D,F) unsymmetrisch ausgebildet ist.

5. Schraube (1,1',1",1‴) gemäß mindestens einem der vorhergehenden Ansprüche, wobei sich die Schraube (1,1',1",1‴) von einem Kopf (3) mit einem Kraftangriff zu einem vorderen Bereich (4,4',4",4‴), insbesondere einer Spitze, erstreckt, wobei der Gewindeprofilwinkel (a,c,e) im vorderen Bereich (A,C,E,4,4',4",4‴) größer ist als der Gewindeprofilwinkel (b,d,f) in einem hinteren Bereich (B,D,F).

6. Schraube (1,1',1",1‴) gemäß mindestens einem der vorhergehenden Ansprüche, wobei mehrere Bereiche (A,B,C,D,E,F) mit unterschiedlichen Gewindeprofilwinkeln (a,b,c,d,e,f) abwechselnd hintereinander entlang der Schraubenlängsachse (L) angeordnet sind.
